(19) **Europäisches Patentamt / European Patent Office / Office européen des brevets**

(11) **EP 1 750 403 B1**

(12) **EUROPEAN PATENT SPECIFICATION**

(45) Date of publication and mention of the grant of the patent:
**30.07.2008 Bulletin 2008/31**

(51) Int Cl.:
**H04L 27/26** (2006.01)

(21) Application number: **05016693.3**

(22) Date of filing: **01.08.2005**

(54) **Method for relaying information received via a first channel to a second channel and relay apparatus**

Verfahren zum Informationsweiterleiten mittels eines ersten Kanals zu einem zweiten Kanal und Funkrelaisvorrichtung

Procédé pour retransmettre des informations reçues sur un premier canal à un second canal et dispositif répéteur correspondant

(84) Designated Contracting States:
**DE GB**

(43) Date of publication of application:
**07.02.2007 Bulletin 2007/06**

(73) Proprietor: **NTT DoCoMo, Inc.
Tokyo (JP)**

(72) Inventor: **Herdin, Markus, Dr.
80634 München (DE)**

(74) Representative: **Schoppe, Fritz
Patentanwälte
Schoppe, Zimmermann, Stöckeler & Zinkler
Postfach 246
82043 Pullach bei München (DE)**

(56) References cited:
**US-A- 5 659 879**

• **LIYU CAI ET AL: "Improved HARQ scheme using channel quality feedback for OFDM systems" 2004 IEEE 59TH VEHICULAR TECHNOLOGY CONFERENCE. VTC 2004-SPRING (IEEE CAT. NO.04CH37514) IEEE PISCATAWAY, NJ, USA, vol. 4, 2004, pages 1869-1872 Vol., XP002358537 ISBN: 0-7803-8255-2**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention refers to the technical field of communications and particularly to the field of relay-based data transmission.

Multihop networks have gained recently a lot of interest in the mobile radio research community. They are a promising solution to a major problem that will appear in future mobile radio communication systems (4G = fourth generation), namely the range. Because of the high envisaged center frequency of 5 GHz and the large bandwidth of up to 100 MHz, a significantly increased pathloss and noise power level has to be expected, which translates into a significantly reduced area a base station can cover (as shown in Werner Mohr, Rainer Lüder, and Karl-Heinz Möhrmann, "Data Rate Estimates, Range Calculations and Spectrum Demand for New Elements of Systems Beyond IMT 2000," in 5th International Symposium on Wireless Personal Multimedia Communications, October 2002, vol. 1, pages 37-46). By introducing relay stations that forward the signal from the base station to far distant mobile stations, this problem can be relaxed. Such relays can be other mobiles or dedicated infrastructure relay stations with fixed power supply. Especially the latter case is of high importance for service providers.

Two main principles of relaying have been identified to be usable in such scenarios: Amplify-and-Forward (AF) and Decode-and-Forward (DF). AF means that a sampled version of the received signal is stored and then retransmitted by the relay station without performing any decoding. This has the big advantage that the relay needs no or only partly knowledge about the structure and coding scheme of the signal. This allows for easy upgrade of a mobile communication network regarding e.g. new coding schemes, without also having to upgrade the relay stations. DF, in contrast to this, means that the signal is decoded at the relay station and re-encoded for retransmission. This has the main advantage that the transmission can be optimized for both links, separately. Furthermore, the signal is regenerated at the relay station, which is not the case for AF. Due to its simple structure, the focus in this application lies on AF.

There exist already a large number of publications on different aspects of multihop networks. A fundamental analysis of cooperative relaying systems was done by

Laneman (J. Nicholas Laneman, David N.C. Tse, and Gregory W. Wornell, "Cooperative Diversity in Wireless Networks: Efficient Protocols and Outage Behavior," IEEE Transactions on Information Theory, accepted for publication), who showed that AF schemes provide full diversity gains.

Also Sendonaris (Andrew Sendonaris, Elza Erkip, and Behnaam Aazhang, "User Cooperation Diversity, Part I: System Description," IEEE Transactions on Communications, vol. 15, pages 1927-1938, November 2003, and

Andrew Sendonaris, Elza Erkip, and Behnaam Aazhang, "User Cooperation Diversity, Part II: Implementation Aspects and Performance Analysis," IEEE Transactions on Communication, vol. 15, pages 1939-1948, November 2003) aims on achieving diversity using relay stations. Other issues that were investigated in the past were distributed space-time coding as shown in

Ingmar Hammerstroem, Marc Kuhn, and Boris Rankov, "Space-Time Processing for Cooperative Relay Networks," in Proc. IEEE Vehicular Technology Conference, October 2004, capacity enhancements due to usage of relays as virtual antenna arrays as shown in

M. Dohler, J. Dominguez, and H. Aghvami, "Link capacity analysis for virtual antenna arrays," in Proc. IEEE Vehicular Technology Conference, September 2002, vol. 1, pages 440-443 and rank improvements of a MIMO channel when single-antenna relays are used , as shown in

Armin Wittneben and Boris Rankov, "Impact of Cooperative Relays on the Capacity of Rank-Deficient MIMO Channels" in Proceedings of the 12th IST Summit on Mobile and Wireless Communications, Aveiro, Portugal, June 2003, pages 421-425.

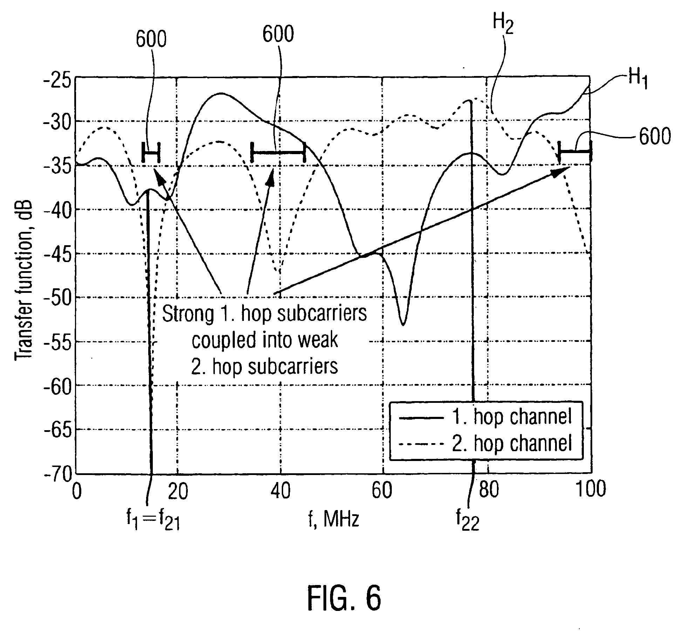

As already mentioned, Amplify-and-Forward (AF) is a simple but effective relaying concept for multihop networks that combines transparency regarding modulation format and coding scheme with ease of implementation. Conventional AF, however, does not take into account the transfer function of the first and the second hop channels. For OFDM based systems, this appears to be sub-optimum. This can especially be concluded from Fig. 6, in which the solid line $H_1$ denotes the transfer function in dependence of the frequency of the first hop (for example a communication channel from a base station to a relay station) and wherein a dashed line $H_2$ denotes the transfer function in dependence of the frequency of the second hop (for example a communication channel from the relay station to a mobile terminal station). As can be furthermore concluded from Fig. 6, subcarriers which have a center or carrier frequency $f_1$ in the frequency bands 600 have a high transmission capacity in the first hop and a poor transmission capacity in the second hop. This means that in these frequency bands strong subcarriers in the first hop would couple into weak subcarriers in the second hop. Thus, in information loss will probably occur in the second hop.

Summarizing, for Amplify-and-Forward (AF) relays, generally the problem appears that the channels for the first and the second hop (for example downlink: 1. Hop is base station-to-relay station channel, 2. Hop is relay station-to-mobile station; uplink vice-versa) are not matched to each other. For OFDM this means that an SNR loss occurs because of the fact that strong subcarrier signals arriving at the relay sometimes couple into weak subcarriers of the second hop channel. Both, the base station and the mobile station, however, are only able to adapt transmission to the overall channel. This means they cannot overcome this disadvantage.

However, relaying for OFDM systems was considered theoretically in

Guoqing Li and Jui Liu, "On the Capacity of the Broadband Relay Networks," in Proc. 38th Annual Asilomar Conference on Signals, Systems and Computers, CA, USA, November 2004,

but which is unfortunately of no use in the present case having different transfer functions for the first and second hop. No solution to this problem is known up to now.

The scientific publication of Liyu, C. et al: "Improved HARQ scheme using channel quality feedback for OFDM systems", 2004 IEEE 59th Vehicular Technology Conference, VTC 2004-Spring (IEEE CAT. NO. 04CH37514) IEEE Piscataway, NJ, USA, vol. 4, 2004, pages 1869-1872 vol., XP002358537 discloses an improved chase combination scheme to take advantage of the channel quality feedback information, which are mandatory for adaptive modulation encoding (AMC) scheme, to enhance the throughput of OFDM based mobile communication systems. By comparing the signal-to-noise ratio (SNR) measured on subcarriers with a predetermined threshold, the data to be retransmitted are selected and mapped onto the subcarriers that have better channel quality to achieve a higher diversity gain in the next retransmission.

Simulation results prove that such an operation can reduce the amount of retransmitted data and the resource usage in retransmission, which leads to a higher throughput efficiency than conventional chase combining schemes.

Thus, it is the object of the present invention to provide a possibility for an improvement of a relay-based transmission in a communication system. Especially the aspects of enlargement of transmission range, improvement of transmission capacity, and quality-of-service, and low implementation costs shall be addressed.

This object is achieved by a method according to claim 1, a relay apparatus according to claim 13, or a computer program according to claim 14.

The present invention provides a method for relaying information received via a first channel to a second channel, according to claim 1.

Furthermore, the present invention provides a relay apparatus for relaying information received via a first channel to a second channel, according to claim 13.

The present invention is based on the finding that the received subcarrier signals at the relay station are reordered/reassigned before they are retransmitted. This ensures that strong subcarrier signals arriving at the relay station are preferably coupled into strong subcarriers of the second hop channel. For that purpose, in an preferred embodiment of the invention, the relay receives and decodes the OFDM packets up to the FFT, in order to have access to the pilot symbols that were transmitted by the base station. Note, that the relay does not need to demodulate the data, which would require a high effort. Based on the pilot symbols, the relay is (in that embodiment) able to estimate the transfer function of the first hop channel. In a bi-directional transmission systen, the relay also knows (or can estimate) the transfer function of the second hop channel from the last uplink transmission. Therefore, the relay can calculate an optimum subcarrier reordering function or at least one subcarrier to be reordered such that the overall capacity can be maximized or at least improved. To reduce the necessary signaling overhead, the subcarrier reordering can be done on a chunk basis, i.e. by reordering always a chunk of subcarriers together instead of single subcarriers, separately. By this method, a signaling overhead of less than 1.5 % is necessary for large OFDM packets. The proposed methods gives an SNR gain of up to 3 dB.

The present invention provides the advantage that a significant SNR gain over conventional OFDM relaying can be achieved. Since relays will play an important role in future (4G) mobile radio systems, the proposed approach will give an important advantage. The given SNR gain translates into higher range (distance from the base station) or higher capacity and better QoS (QoS = Quality of Service). Furthermore, the computational effort is low, which allows for incorporating the inventive approach in relatively simple AF relays.

A preferred embodiment of the present invention is described with respect to the accompanying Figures, in which

Fig. 1A          shows an embodiment of the inventive approach schematicly;

Fig. 1B          shows a block diagram of an exemplary embodiment of the present invention;

Fig. 2a and 2b   shows an example for a initialization of a data transfer between a base station and a mobile station using the relay in which the inventive approach is applied;

Fig. 3           shows a table comprising power profiles for the channel models used for the simulation of the exemplary system model as disclosed in Fig. 1;

Figs. 4 and 5    shows diagrams comprising simulation results of a data transmission simulation using a relay in which the inventive approach is performed; and

Fig. 6             shows a diagram with exemplary channel transfer functions of a first channel from the base station to the relay and a second channel from the relay to the mobile station.

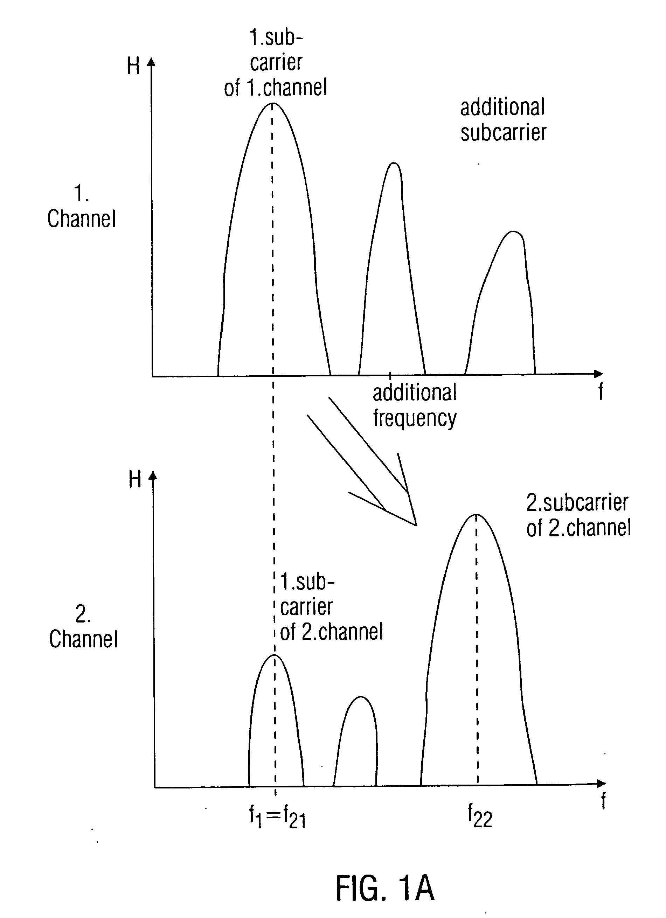

In the Fig. 1A the inventive approach is disclosed schematically in an preferred embodiment. Herein, a first channel has a first (of, for example, a plurality) of subcarriers and a second channel has a first and second subcarrier (of, for example, also a plurality of subcarriers). The first subcarrier of the first channel and the first subcarrier of the second channel have the same center frequency $f_1$. Furthermore, the first subcarrier of the second channel has a weaker transmission property or a weaker transmission capacity than the second subcarrier of the second subcarrier of the second channel. That means, more information can be transmitted on the second subcarrier of the second channel than over the first subcarrier of the second channel. Now. The inventive approach is such, that the information, transmitted over the first subcarrier of the first channel is assigned to the second subcarrier of the second channel. Thus, a relaying of information from a first channel to the second channel can be made more efficient due to the fact that a channel capacity can be exploited more efficiently.

Furthermore, the first channel can have an additional subcarrier at an additional frequency. The additional subcarrier has a transmission property (denoted by a value of a transfer function) which is worse than the transmission property of the an additional subcarrier. According to an embodiment of the present invention, the information assigned to the additional subcarrier in the first channel can be assigned to the first subcarrier of the second channel. This provides the basis for an reassignment of the information on the subcarriers in the first channel to different corresponding subcarriers in the second channel. Especially a reassignment of the information in the subcarriers of the first channel according to the strength of the subcarriers in the second channel can be performed. This reassignment, which is a preferred embodiment of the present invention is further described with respect of the following example:

A system having 3 subcarriers is assumed (for demonstration purpose only). If the subcarriers of the first and second channel were ordered according to their transmission powers, respectively their transmission capacity or transmission property, the following order is assumed:

     Channel 1: [2 1 3]
     Channel 2: [3 1 2]

The assignment is accomplished now correspondingly, i.g. the second subcarrier of the first channel into the third subcarrier of the second channel, the first subcarreir of the first channel into the first subcarrier of the second channel and the third subcarrier of the first channel into the second subcarrier of the second channel:

     2 -> 3
     1 -> 1
     3 -> 2

A further case is considered in which the channels have N+1, i.e. 4 subcarriers. Here the order is assumed to be:

     Channel 1: [2 1 4 3]
     Channel 2: [4 3 1 2]

This means that the power of the fourth subcarrier of the first channel lies, for example, in between the power of the first and third subcarrier of the first channel and the fourth subcarrier of the second channel is now the stronges subcarrier of the second channel.

The assignment now looks completely different:

     2 -> 4
     1 -> 3
     4 -> 1
     3 -> 2

In the following an OFDM TDD scenario is exemplarily considered where one base station communicates with one mobile station using a single relay station. However, also a wireline-based data transmission system can be used. It is further assumed that the mobile station is out of reach of the base station which means that only the relay station can receive and transmit from or to base station and mobile station, respectively. It is assumed here that the whole bandwidth is assigned to one mobile station. The proposed relaying scheme, however, could also be used for the case that several mobiles share the whole bandwidth. In that case, additionally, fairness issues should be considered, which would be out of the scope of this application. The relay operates in an AF manner. This means that communication between base station and relay covers two time slots. For downlink, the base station transmits an OFDM packet during the first time slot and the relay receives and stores the signal. During the second time slot, the relay retransmits a processed version of the stored signal towards the mobile station. Processing, however, does not include decoding and re-encoding. For uplink transmission, the role of base station and mobile station are exchanged.

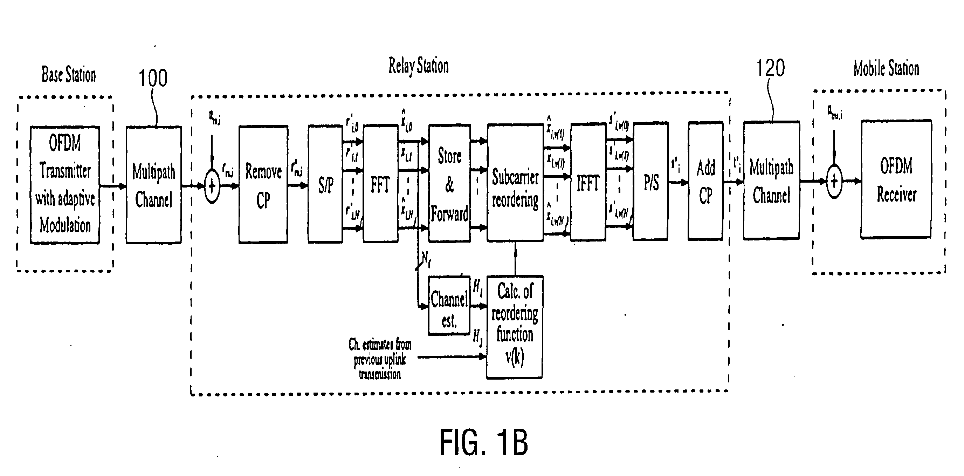

A block diagram of the example of the considered system model is shown in Fig. 1B. During time slot 1, the relay receives the signal via the first channel 100 from the base station and processes it up to the FFT (including the FFT) according to an OFDM processing scheme so that the relay has access to the pilot bits or symbols that were transmitted from the base station to the relay via the first channel 100. The pilot bits are then used to estimate the first hop channel 100, which is the base station-to-relay station (BS-to-RS) channel in case of a downlink transmission. During uplink transmission the relay estimates the mobile station-to-relay station (MS-to-RS) channel 120 , which is assumed to be equal to the relay station-to-mobile station (RS-to-MS) channel because of reciprocity for TDD systems and the assumption that the channel did not change significantly since the last uplink transmission. This means, it has always (nearly) up-to-date channel state information for both channels available. The receive SNRs of each subcarrier of the first hop and second hop channel are then used to calculate subcarrier mapping functions $v_{DL}(k)$ and $v_{UL}(k)$, for downlink (DL) and uplink (UL), respectively. $v_{DL}(k)$ and $v_{UL}(k)$ give the subcarrier index of the first hop subcarrier (from the base station to the relay) that is transmitted over the $k^{th}$ second hop subcarrier (from the relay to the mobile station), i.e. during retransmission. The relay therefore reconstructs the OFDM symbols for retransmission using the rearrangement of the received subcarrier signals on different subcarriers in the forwarding path of the relay.

In this description it is assumed that the maximum delay of the channel is below the length of the cyclic prefix and that the channel does not change during transmission of one OFDM packet. This means that the channel can be considered in frequency domain with orthogonal subcarriers. For the $k^{th}$ subcarrier, the received signal at the destination becomes

$$Y_k = H_{2,k} g H_{1,v(k)} X_{v(k)} + H_{2,k} g N_{1,v(k)} + N_{2,k} \qquad (1)$$

Here, $Y_k$ is the receive signal, $H_{2,k}$ the second hop channel coefficient, g the gain coefficient by which the signal is amplified in the relay station, $H_{1,v(k)}$ the first hop channel coefficient, $X_{v(k)}$ the transmit symbol, $N_{1,v(k)}$ the received noise at the relay and $N_{2,k}$ the received noise at the destination. For downlink transmission $H_{1,k}$, is the BS-to-RS channel, $H_{2,k}$ the RS-to-MS channel, $N_{2,k}$ the received noise at the mobile station and $v(k) = v_{DL}(k)$. For uplink transmission $H_{1,k}$ is the RS-to-MS channel, $H_{2,k}$ the BS-to-RS channel, $N_{2,k}$ the received noise at the base station and $v(k) = v_{UL}(k)$. The received noise per subcarrier is assumed to be equal for all subcarriers and is given by $\sigma_{n,1}^2$ and $\sigma_{n,2}^2$ for the relay station and the destination, respectively. The total transmit power of the transmitting station $P_t$ is distributed equally over the $N_{f,used}$ used subcarriers, hence no water filling is considered here. The proposed schemes are, however, also applicable to the case of water filling. In order to not exceed the maximum transmit power $P_{t,rs}$ of the relay station, the relay has to choose the gain coefficient g such that

$$\frac{g^2}{P_{t,rs}} \left( \sum_{k=1}^{N_{f,used}} \left| H_{1,k} \right|^2 \frac{P_t}{N_{f,used}} + \sigma_{n,1}^2 \right) = 1 \qquad (2)$$

is fulfilled.

For conventional OFDM relaying the subcarrier mapping function is $v(k) = k$, which means, no reordering takes place. The received subcarrier signals are amplified by a constant gain coefficient g and retransmitted during the second time slot. This, however, appears to be sub-optimum. As is illustrated in Fig. 6 for a simulated indoor channel, it might happen that strong received subcarrier signals (for example on carrier frequency $f_1$ in the first hop channel) couple into weak subcarriers of the second hop channel (for example on carrier frequency $f_{21}$ in the second hop channel) and vice-versa. To maximize capacity, however, it can be proven that the subcarriers should be coupled into each other in a sorted way. This means that for example the strongest received subcarrier signal from the first hop channel has preferably to be coupled into the strongest subcarrier of the second hop channel, the second strongest received subcarrier signal preferably into the second strongest subcarrier or the second hop, etc. The proof of this theorem is omitted here. Expressed in other words, if a data block subcarrier is transmitted via a subcarrier at a first frequency in the first hop channel and a subcharrier in the second hop channel on the first frequency has a weaker transmission capacity than another subcarrier in the second hop channel at a second frequency, a reassignment of the data block can be performed in the relay, such that the data block is forwarded to the mobile station on the second subcarrier on the second frequency in the second hop channel.

In order to make communication between base station and mobile station possible, there should be a signaling of the corresponding subcarrier mapping function $v(k)$ to the destination. A simple solution is to reserve the first bits of each subcarrier within an OFDM packet to transmit the number of the corresponding subcarrier by the base station. The subcarrier reordering that takes place at the relay also affects the subcarrier numbers, which allows the destination to learn the current subcarrier mapping function and subsequently to reconstruct the transmitted OFDM packet. For the system proposal that is considered in this application the number of subcarriers is $N_f = 1664$ which means that for example, 11 Bit per subcarrier, in total 18,304 Bit per OFDM packet, are necessary for signaling, which will likely be prohibitive for practical realization.

To overcome this problem, it is proposed to perform the mapping function in the relay station not on a subcarrier basis but on chunk basis. Using a chunk size in frequency domain of, for example, 16 subcarriers, this means that only 104 chunks have to be reordered. For that purpose, the average subcarrier SNR $\rho_{i,1}$ and $\rho_{2,1}$ within each chunk is calculated for the first and the second hop channel, respectively. For the $1^{th}$ chunk this gives

$$G_{i,1} = \frac{P_t}{\sigma_{n,1}^2} \frac{1}{N_c} \sum_{k=1+(l-1)N_c}^{lN_c} \left|H_{i,k}\right|^2, \quad (3)$$

with i = 1,2 for the first and the second hop channel, respectively. The ordering operation can be performed using the average chunk SNRs instead of the SNR of each subcarrier, separately. This means that subcarriers are ordered chunk-wise. Note, that the constant term left of the sum does not influence the order, hence can be omitted. For signaling purposes, now 7 Bit per chunk, in total 728 Bit per OFDM packet are sufficient. For high rate data services with OFDM packets containing 50,000 or more information bits, this means that a signaling overhead of less than 1.5 % is necessary.

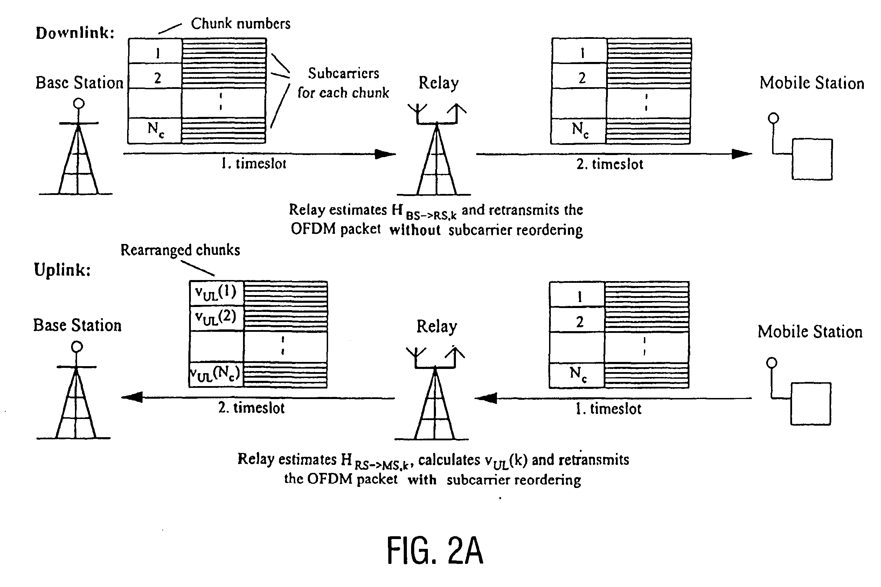

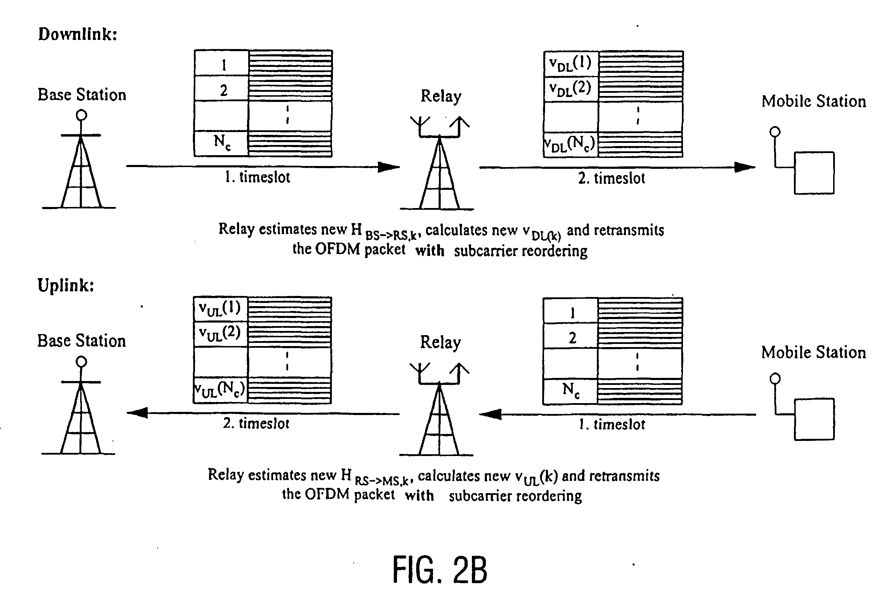

Thus, the disclosed example of the relaying scheme preferably performs a two steps: (i) the relay knows the BS-to-RS and the RS-to-MS channel to calculate the subcarrier reordering function and (ii) the applied subcarrier reordering function is signaled to the destination. This can be fulfilled with the following two-phase protocol consisting of an initialization phase and a transmission phase. The transmission scheme is shown in more detail in Fig. 2a and 2b. It starts (for description purposes) with downlink transmission, however, it would similarly be possible to start with uplink transmission. OFDM packets that are transmitted by either the base station or the mobile station consist of several OFDM symbols. Typically, the number of OFDM symbols per packet will be chosen as a multiple of the temporal chunk size. This means that for a chunk size of e.g. 16 subcarriers times 5 OFDM symbols, the number of OFDM symbols per packet will be a multiple of 5. Each chunk in the first OFDM symbol of an OFDM packet contains a reserved bit field that carries the chunk number in the frequency domain. This allows identifying the right chunk order at the destination when they have been reordered by the relay. The essential parts of the overall protocol are summarized in Fig. 2a and 2b.

The initialization phase consists of one downlink and one uplink transmission. The base station starts with the transmission of one OFDM packet to the relay during the first time slot. The base station has at this stage no information about the transfer function of the channel, therefore it applies the same modulation format to all carriers.

The relay uses the pilot bits that were transmitted by the base station to estimate the BS-to-RS channel. In order to have an estimate of the channel transfer function before the retransmission of the packet towards the destination, the relay might only use $(N_{t,chunk}-1)$ OFDM symbols for channel estimation, with $N_{t,chunk}$ the number of OFDM symbols per OFDM packet. Since the relay does not know the RS-to-MS channel yet, it performs retransmission of the received OFDM packet within the second time slot without any subcarrier reordering. The mobile station receives and decodes the packet. Note, that the mobile station always knows the overall transfer function from the base station to the mobile station since the relay also retransmits the pilot symbols as they were received. This first step of the transmission is shown in the upper part of Fig. 2a.

During the following uplink transmission, the mobile station transmits an OFDM packet, also using the same modulation format for all subcarriers, i.e. no adaptive modulation. The relay receives the packet and performs again channel estimation but now for the RS-to-MS channel. Based on the channel estimates, it calculates the uplink subcarrier reordering function $v_{UL}(k)$ and retransmits the received OFDM packet with the subcarriers reordered, correspondingly. Again, it might only use the first $N_{t,chunk}$ -1 OFDM symbols of OFDM packet for channel estimation in order to have enough time for channel estimation and calculation of the subcarrier mapping function before the retransmission. Note, that the mapping process is done on a chunk basis. In the evaluations section below, is considered to map on a subcarrier basis, for comparison. The base station receives the OFDM packet and estimates now the overall MS-to-BS channel that results from retransmission with the frequency chunks rearranged in the corresponding manner. This finalizes the initialization phase, which is shown in the lower part of Fig. 2a.

During the transmission phase (which is shown in Fig. 2b) both the base station and the mobile station are able to adapt their transmission to the overall BS-to-MS channel that was estimated in the last uplink and downlink phase, respectively. This means they can (but not necessarily have to) apply adaptive modulation according to the SNR of each subcarrier. Both the case of non-adaptive and adaptive transmission is considered in the evaluation section below. The relay receives the OFDM packet in the first time slot, estimates the current first hop channel and calculates the new subcarrier mapping function based on the last available estimates of the first and second hop channels. In the second time slot it then retransmits the OFDM packet after having applied the subcarrier mapping. The only important assumption to allow this relaying scheme to be highly efficient is that the BS-to-RS and RS-to-MS channels do not change significantly between uplink and downlink transmission. This, however, is also necessary for TDD systems with adaptive modulation. The destination is always able to decode and reconstruct the original OFDM data packet by making use of the chunk numbers.

The system parameters which are considered in this paper are based on the current IST WINNER (www.ist-winner.org) parameters for the short-range TDD mode. The center frequency is 5 GHz. The system bandwidth is 100 MHz with 2048 subcarriers, where only $N_f$ = 1664 are in use. This means the actual signal bandwidth is 81.25 MHz. The OFDM symbol length is 20.48 $\mu$s and the subcarrier spacing 48828 Hz. A cyclic prefix of 1.28 $\mu$s is used in the system proposal, however, since it is assumed that the maximum channel delay is below the cyclic prefix length and the channel to be constant for the duration of one OFDM packet, the simulation can be done in the frequency domain. Allocation of resources is chunk based where a single chunk consists of 16 subcarriers and 5 OFDM symbols in time, i.e. a total of 80 OFDM symbols.

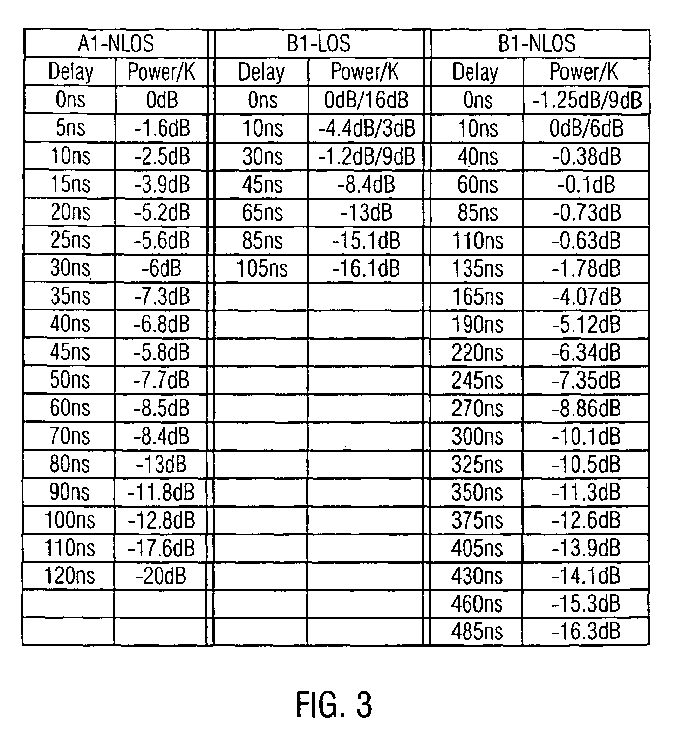

For the simulation, a scenario is considered, where the mobile station is out of reach of the base station. This means it can only receive the signal from the relay station. Only the downlink case is simulated here. A simple tap delay line model with Rice or Rayleigh fading taps is used for simulation of the frequency selective channel. The power delay profiles are based on the WINNER A1-NLOS, B1-LOS and B1-NLOS interim channel models (as shown in IST-2003-507581 WINNER D5.3 ver 2.4 - Interim Channel Models). The power delay profiles and the K factors for each tap are shown in the table in Fig. 3.

In the simulation, only 1 OFDM symbol per channel realization is transmitted, hence an OFDM packet consists of only one OFDM symbol. The target Rate is set to $R_t$ = *2 Bit/s/Hz* per subcarrier. This means that a total number of $R_t \cdot N_f$ = 3328 code bits are transmitted per OFDM symbol. The case of non-adaptive and adaptive modulation is considered. Non-adaptive modulation means that the same modulation format is selected for all subcarriers, i.e. QPSK. In case of adaptive modulation, the algorithm of Fischer et al. (as shown in Robert P.H. Fischer and Johannes B. Huber, "A new loading algorithm for discrete multitone transmission," in Proc. Global Telecommunications Conference, November 1996, vol. 1, pages 724-728) is used to allocate the number of transmitted bits per subcarrier. The possible modulation formats are limited to QPSK and 16 QAM and 64 QAM. Note that for adaptive modulation, not all subcarriers are used. This means that the power is equally distributed among the used subcarriers, which gives an SNR gain at relay and mobile station.

A convolutional code with generators [23; 35], rate 1/2, memory 4 and random interleaving is applied to each OFDM packet with the frame length equal to the OFDM packet length. The code is terminated, which means that the number of information bits transmitted equals to 1/2 of the number of code bits minus the memory length. At the receiver the log-likelihood ratios are calculated for each code bit and a Viterbi decoder is used to decode the OFDM packets.

The average receive SNR at the relay station is fixed to 10 dB for the case of non-adaptive modulation at the base station. For adaptive modulation at the base station the actual receive SNR at the relay station becomes higher since not all subcarriers are used then and the transmit power per subcarrier becomes higher. The SNR at the mobile station is varied from 0 to 15 dB, again assuming non-adaptive modulation with equal power per subcarrier. Actually, the transmit power per subcarrier depends on the first hop channel and on the number of subcarriers used for transmission. Since the overall transmit power of the relay station is constant, the receive power and therefore the average receive SNR at the mobile station will therefore be generally higher. Note, that the relay station retransmits all subcarriers, regardless whether they contain a signal or not. Restricting transmission to those subcarriers that are actually carrying a signal would only give a minor SNR improvement because the received noise power at the relay station is assumed to be significantly below the signal power (10 dB SNR).

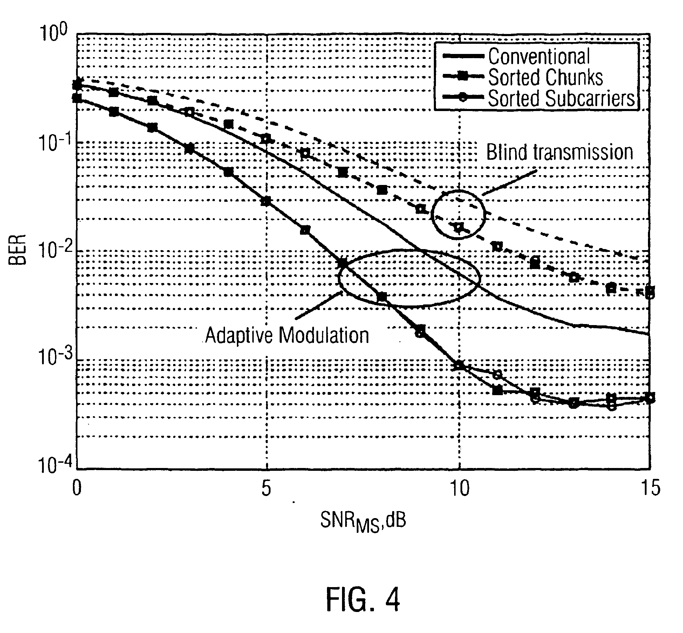

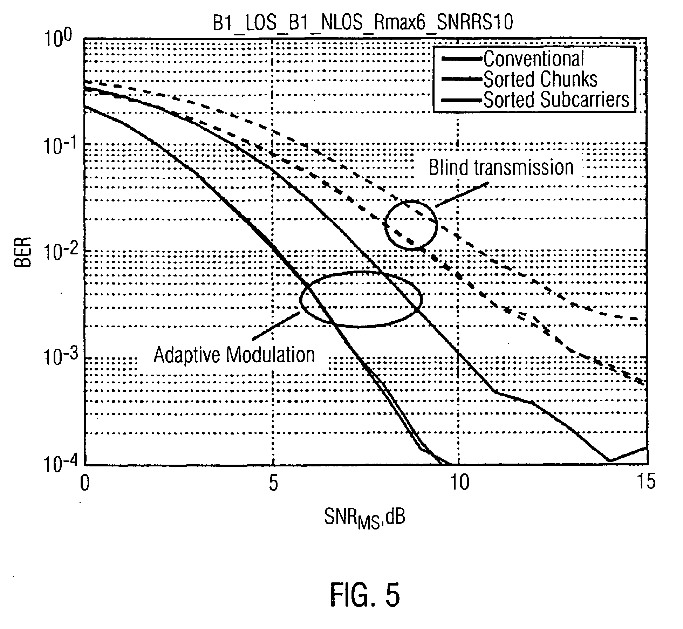

Two scenarios were considered, an indoor scenario where both hops (BS-to-RS channel and RS-to-MS channel) are A1-NLOS channels and an outdoor scenario where the BS-to-RS link is a B1-LOS channel and the RS-to-MS channel a B1-NLOS channel. The results are shown in Fig. 4 and 5, respectively. Herein conventional OFDM-AF with adaptive OFDM-AF on a chunk basis and a subcarrier basis are compared for non-adaptive OFDM transmission (equal modulation format per subcarrier) and adaptive modulation, wherein in Fig. 4 the indoor scenario with A1-NLOS channels and in Fig. 5 the indoor scenario with a B1-LOS BS-to-RS (first hop) channel and a B1-NLOS RS-to-MS (second hop) channel is disclosed.

Both scenarios show a clear SNR gain for subcarrier reordering compared to conventional OFDM relaying. In case of non-adaptive modulation, an SNR gain of more than 1 dB is achieved, for adaptive modulation the gain increases to up to nearly 3 dB. Further, a decreased error floor due to the noise enhancement at the relay station is observed. This comes from the fact that already the relay station gains from an increased receive SNR, which translates into a lower noise floor that is added to the signal. The performance loss for chunk-based instead of subcarrier-based reordering of the subcarriers appears to be negligible. This means that chunk-based subcarrier reordering is very effective and efficient regarding the necessary signaling overhead.

Summarizing, an adaptive OFDM AF relaying scheme has been presented that makes use of the estimated transfer functions of the first and second hop channels to optimize relaying to the mobile station. This relaying scheme has been proofed to achieve SNR gains in the order of 2 dB compared to conventional, i.e. non-adaptive OFDM relaying. The proposed relaying scheme reorders the received subcarrier signals at the relay station such that an optimized coupling into the second hop subcarriers is achieved. It appears that reordering on a chunk basis, where subcarriers are grouped to chunks, achieves nearly the same gain as reordering on a subcarrier basis. This reduces the necessary signaling overhead significantly. Further, a signaling scheme has been proposed to efficiently transmit the necessary signaling information from the relay station to both mobile station and base station. For high-rate data transmission the necessary signaling overhead was shown to be below 1.5 %.

In addition to the relaying scheme, a signaling scheme is proposed that allows for efficiently transmitting the corresponding subcarrier reordering function to the destination. This is necessary to allow the destination to finally correctly decode the relayed OFDM packet.

The proposed method gives a significant SNR gain that translates into increased coverage, increased capacity and/or better QoS. It comes at low cost of signal processing at the relay station.

Expressed in other words, an AF relaying scheme is proposed in this application that adapts to the transfer functions of both channels. The relay estimates the transfer functions and rearranges the subcarriers in each OFDM packet such that an optimum coupling between subcarriers of the first and the second hop channels occurs. Additionally, a signaling scheme is developed that allows for an efficient transfer of the necessary information. Simulations show that the proposed relaying scheme achieves significant SNR gains over conventional OPDM relaying.

Depending on certain implementation requirements, the inventive methods can be implemented in hardware or in software. The implementation can be performed using a digital storage medium, in particular, a disc or a CD having electronically readable control signals stored thereon, which can cooperate with a programmable computer system such that the inventive methods are performed. Generally, the present invention is therefore a computer program product with a program code stored on a machine-readable carrier, the program code performing the inventive methods, when the computer program product runs on a computer. In other words, the inventive methods are, therefore, a computer program having a program code for performing the inventive methods, when the computer program runs on a computer.

**Claims**

1. A method for relaying information received via a first channel (100) to a second channel (120),
   the first channel (100) having a first group of subcarriers at the first frequency band ($f_1$) and having assigned a block of information including a plurality of information units, wherein the first channel (100) has an additional group of subcarriers at an additional frequency band, the additional group of subcarriers having assigned an additional block of information, a transmission property for the first channel (100) at the first frequency band ($f_1$) being better than a transmission property for the first channel (100) at the additional frequency band,
   the second channel (120) having a first group of subcarriers at the first frequency band ($f_1$) and a second group of subcarriers at a second frequency band ($f_{22}$), a transmission property for the second channel (120) at the first frequency band ($f_1$) being worse than a transmission property for the second channel (120) at the second frequency band ($f_{22}$), the method comprising the step of:

   assigning the block of information from the first group of subcarriers of the first channel (100) to the second group of subcarriers of the second channel (120); and
   assigning the additional block of information being assigned to the additional group of subcarriers of the first channel (100) to the first group of subcarriers of the second channel (120).

2. Method according to claim 1, further comprising the step of:

   transmitting an information about an assignment of the block of information from the first group of subcarriers of the first channel (100) to the second group of subcarriers of the second channel (120) via the second channel (120).

**3.** Method according to one of claims 1 to 2, wherein a step of:

receiving the information wirelessly from the first channel (100) precedes the step of assigning; and wherein a step of
transmitting the information wirelessly via the second channel (120) follows the step of assigning.

**4.** Method according to one of claims 1 to 3, wherein a reception of information from the first channel (100) comprises performing a Fourier-Transformation operation or an inverse Fourier-Transformation operation.

**5.** Method according to one of claims 1 to 4, wherein the relaying of the information via the second channel (120) comprises generating a transmit signal by performing a Fourier-Transformation operation or an inverse Fourier-Transformation operation in which an assignment of the block of information to the second subcarrier of the second channel (120) and the block of information is used as an input for the Fourier-Transformation operation or the inverse Fourier-Transformation operation.

**6.** Method according to one of claims 1 to 5, further comprising the step of:

determining values of a transfer function ($H_1$) of the first channel (100) from the block of information received via the first channel (100).

**7.** Method according to one of claims 1 to 6, wherein the step of assigning comprises the step of:

comparing values of the transfer function ($H_2$) of the second channel (120) at the first ($f_1$) and second ($f_2$) frequency bands in order to detect the worse transmission property of the first group of subcarriers of the second channel (120) in comparison with the transmission property of the second group of subcarriers of the second channel (120).

**8.** Method according to one of claims 1 to 7, wherein the step of assigning comprises an averaging of the values of the transfer function of the subchannels of the second channel (120) having carrier frequencies in the first frequency band ($f_1$) and an averaging of the values of the transfer function of subcarriers of the second channel (120) having carrier frequencies in the second frequency band ($f_{22}$).

**9.** Method according to one of claims 1 to 8, wherein the step of assigning comprises a time measuring to determine a time interval and keeping constant an assignment of the block of information from the first group of subcarriers of the first channel (100) to the second group of subcarriers of the second channel (120) during a plurality of said time intervals.

**10.** Method according to claim 9, wherein the step of assigning comprises an averaging of the values of the transfer function of the subcarriers of the first channel (100) having carrier frequencies in the in the first frequency band ($f_1$) and an averaging of the values of the transfer function of subcarriers of the first channel (100) having carrier frequencies in the additional frequency band.

**11.** Method according to claim 9 or 10, wherein the second channel (120) comprises a further group of subcarriers at a further frequency band, a transmission property of the further group of subcarriers of the second channel (120) being better than a transmission property of the second group of subcarriers of the second channel (120) and wherein the step of assigning comprises
assigning the packet of information from the first group of subcarriers of the first channel (100) to the second group of subcarriers of the second channel (120) and not assigning the packet of information from the first group of subcarriers of the first channel (100) to the further group of subcarriers of the second channel (120).

**12.** Method according to one of claims 1 to 11, wherein the second channel (120) has a third group of subcarriers at a third frequency band and having assigned a further block of information including a plurality of information units and the first channel (100) has a fourth group of subcarriers at the third frequency band and a fifth group of subcarriers at a fourth frequency band, a transmission property for the first channel at the third frequency band being worse than a transmission property of the first channel (100) at the fourth frequency band, or
wherein the second channel (120) has the first group of subcarriers at the first frequency band and having assigned the further block of information including a plurality of information units and the first channel (100) has a fourth group of subcarriers at the first frequency band and a fifth group of subcarriers at a fourth frequency band, a transmission property for the first channel at the first frequency band being worse than a transmission property of the first channel (100) at the fourth frequency band, the method further comprising the step of:

assigning the further block of information from the third group of subcarriers of the second channel (120) to the fifth group of subcarriers of the first channel (100) or assigning the further block of information from the first group of subcarriers of the second channel (120) to the fifth group of subcarriers of the first channel (100).

13. Relay apparatus for relaying information received via a first channel (100) to a second channel (120), the first channel (100) having a first group of subcarriers at the first frequency band ($f_1$) and having assigned a block of information including a plurality of information units, wherein the first channel (100) has an additional group of subcarriers at an additional frequency band, the additional group of subcarriers having assigned an additional block of information, a transmission property for the first channel (100) at the first frequency band ($f_1$) being better than a transmission property for the first channel (100) at the additional frequency band, the second channel (120) having a first group of subcarriers at the first frequency band ($f_1$) and a second group of subcarriers at a second frequency band ($f_{22}$), a transmission property for the second channel (120) at the first frequency band ($f_1$) being worse than a transmission property for the second channel (120) at the second frequency band ($f_{22}$), the relay apparatus comprising:

an assigner being configured to assign the block of information from the first group of subcarriers of the first channel (100) to the second group of subcarriers of the second channel (120) wherein the assigner is furthermore configured for assigning the additional block of information being assigned to the additional group of subcarriers of the first channel (100) to the first group of subcarriers of the second channel (120).

14. Computer program having a program code for performing the method for relaying information according to claim 1, when the computer program runs on a computer.

**Patentansprüche**

1. Ein Verfahren zum Weiterleiten von Informationen, die über einen ersten Kanal (100) empfangen werden, an einen zweiten Kanal (120), wobei der erste Kanal (100) eine erste Gruppe von Teilträgern bei dem ersten Frequenzband ($f_1$) aufweist und demselben ein Block von Informationen zugewiesen ist, die eine Mehrzahl von Informationseinheiten umfassen, wobei der erste Kanal (100) eine zusätzliche Gruppe von Teilträgern bei einem zusätzlichen Frequenzband aufweist, wobei der zusätzlichen Gruppe von Teilträgern ein zusätzlicher Block von Informationen zugewiesen ist, wobei eine Übertragungseigenschaft für den ersten Kanal (100) bei dem ersten Frequenzband ($f_1$) besser als eine Übertragungseigenschaft für den ersten Kanal (100) bei dem zusätzlichen Frequenzband ist, wobei der zweite Kanal (120) eine erste Gruppe von Teilträgern bei dem ersten Frequenzband ($f_1$) und eine zweite Gruppe von Teilträgern bei einem zweiten Frequenzband ($f_{22}$) aufweist, wobei eine Übertragungseigenschaft für den zweiten Kanal (120) bei dem ersten Frequenzband ($f_1$) schlechter als eine Übertragungseigenschaft für den zweiten Kanal (120) bei dem zweiten Frequenzband ($f_{22}$) ist, wobei das Verfahren folgenden Schritt aufweist:

Zuweisen des Blocks von Informationen aus der ersten Gruppe von Teilträgern des ersten Kanals (100) der zweiten Gruppe von Teilträgern des zweiten Kanals (120); und
Zuweisen des zusätzlichen Blocks von Informationen, der der zusätzlichen Gruppe von Teilträgern des ersten Kanals (100) zugewiesen ist, der ersten Gruppe von Teilträgern des zweiten Kanals (120).

2. Verfahren gemäß Anspruch 1, das ferner folgenden Schritt aufweist:

Senden einer Information über eine Zuweisung des Blocks von Informationen aus der ersten Gruppe von Teilträgern des ersten Kanals (100) der zweiten Gruppe von Teilträgern des zweiten Kanals (120) über den zweiten Kanal (120).

3. Verfahren gemäß einem der Ansprüche 1 bis 2, bei dem ein Schritt eines:

Empfangens der Informationen drahtlos von dem ersten Kanal (100) dem Schritt des Zuweisens vorangeht; und bei dem ein Schritt eines
Sendens der Informationen drahtlos über den zweiten Kanal (120) dem Schritt des Zuweisens folgt.

4. Verfahren gemäß einem der Ansprüche 1 bis 3, bei dem ein Empfang von Informationen von dem ersten Kanal (100) ein Durchführen einer Fourier-Transformationsoperation oder einer inversen Fourier-Transformationsoperation aufweist.

5. Verfahren gemäß einem der Ansprüche 1 bis 4, bei dem das Weiterleiten der Informationen über den zweiten Kanal (120) ein Erzeugen eines Sendesignals durch ein Durchführen einer Fourier-Transformationsoperation oder einer inversen Fourier-Transformationsoperation aufweist, bei der eine Zuweisung des Blocks von Informationen dem zweiten Teilträger des zweiten Kanals (120) und der Block von Informationen als eine Eingabe für die Fourier-Transformationsoperation oder die inverse Fourier-Transformationsoperation verwendet wird.

6. Verfahren gemäß einem der Ansprüche 1 bis 5, das ferner folgenden Schritt aufweist:

   Bestimmen von Werten einer Übertragungsfunktion ($H_1$) des ersten Kanals (100) aus dem Block von Informationen, die über den ersten Kanal (100) empfangen werden.

7. Verfahren gemäß einem der Ansprüche 1 bis 6, bei dem der Schritt des Zuweisens folgenden Schritt aufweist:

   Vergleichen von Werten der Übertragungsfunktion ($H_2$) des zweiten Kanals (120) bei dem ersten ($f_1$) und dem zweiten ($f_2$) Frequenzband, um die schlechtere Übertragungseigenschaft der ersten Gruppe von Teilträgern des zweiten Kanals (120) im Vergleich zu der Übertragungseigenschaft der zweiten Gruppe von Teilträgern des zweiten Kanals (120) zu erfassen.

8. Verfahren gemäß einem der Ansprüche 1 bis 7, bei dem der Schritt des Zuweisens ein Mitteln der Werte der Übertragungsfunktion der Teilkanäle des zweiten Kanals (120) mit Trägerfrequenzen in dem ersten Frequenzband ($f_1$) und ein Mitteln der Werte der Übertragungsfunktion von Teilträgern des zweiten Kanals (120) mit Trägerfrequenzen in dem zweiten Frequenzband ($f_{22}$) aufweist.

9. Verfahren gemäß einem der Ansprüche 1 bis 8, bei dem der Schritt des Zuweisens ein Zeitmessen, um ein Zeitintervall zu bestimmen, und ein Konstanthalten einer Zuweisung des Blocks von Informationen aus der ersten Gruppe von Teilträgern des ersten Kanals (100) der zweiten Gruppe von Teilträgern des zweiten Kanals (120) während einer Mehrzahl der Zeitintervalle aufweist.

10. Verfahren gemäß Anspruch 9, bei dem der Schritt des Zuweisens ein Mitteln der Werte der Übertragungsfunktion der Teilträger des ersten Kanals (100) mit Trägerfrequenzen in dem ersten Frequenzband ($f_1$) und ein Mitteln der Werte der Übertragungsfunktion von Teilträgern des ersten Kanals (100) mit Trägerfrequenzen n dem zusätzlichen Frequenzband aufweist.

11. Verfahren gemäß Anspruch 9 oder 10, bei dem der zweite Kanal (120) eine weitere Gruppe von Teilträgern bei einem weiteren Frequenzband aufweist, wobei eine Übertragungseigenschaft der weiteren Gruppe von Teilträgern des zweiten Kanals (120) besser als eine Übertragungseigenschaft der zweiten Gruppe von Teilträgern des zweiten Kanals (120) ist, und wobei der Schritt des Zuweisens ein
Zuweisen des Pakets von Informationen aus der ersten Gruppe von Teilträgern des ersten Kanals (100) der zweiten Gruppe von Teilträgern des zweiten Kanals (120) und ein Nichtzuweisen des Pakets von Informationen aus der ersten Gruppe von Teilträgern des ersten Kanals (100) der weiteren Gruppe von Teilträgern des zweiten Kanals (120) aufweist.

12. Verfahren gemäß einem der Ansprüche 1 bis 11, bei dem der zweite Kanals (120) eine dritte Gruppe von Teilträgern bei einem dritten Frequenzband aufweist und demselben ein weiterer Block von Informationen zugewiesen ist, die eine Mehrzahl von Informationseinheiten umfassen, und der erste Kanal (100) eine vierte Gruppe von Teilträgern bei dem dritten Frequenzband und eine fünfte Gruppe von Teilträgern bei einem vierten Frequenzband aufweist, wobei eine Übertragungseigenschaft für den ersten Kanal bei dem dritten Frequenzband schlechter als eine Übertragungseigenschaft des ersten Kanals (100) bei dem vierten Frequenzband ist, oder
wobei der zweite Kanal (120) die erste Gruppe von Teilträgern bei dem ersten Frequenzband aufweist und demselben der weitere Block von Informationen zugewiesen ist, die eine Mehrzahl von Informationseinheiten umfassen, und der erste Kanal (100) eine vierte Gruppe von Teilträgern bei dem ersten Frequenzband und eine fünfte Gruppe von Teilträgern bei einem vierten Frequenzband aufweist, wobei eine Übertragungseigenschaft für den ersten Kanal bei dem ersten Frequenzband schlechter als eine Übertragungseigenschaft des ersten Kanals (100) bei dem vierten Frequenzband ist, wobei das Verfahren ferner folgenden Schritt aufweist:

Zuweisen des weiteren Blocks von Informationen aus der dritten Gruppe von Teilträgern des zweiten Kanals (120) der fünften Gruppe von Teilträgern des ersten Kanals (100) oder Zuweisen des weiteren Blocks von Informationen aus der ersten Gruppe von Teilträgern des zweiten Kanals (120) der fünften Gruppe von Teilträgern des ersten Kanals (100).

**13.** Weiterleitungsvorrichtung zum Weiterleiten von Informationen, die über einen ersten Kanal (100) empfangen werden, an einen zweiten Kanal (120),

wobei der erste Kanal (100) eine erste Gruppe von Teilträgern bei dem ersten Frequenzband ($f_1$) aufweist und demselben ein Block von Informationen zugewiesen ist, die eine Mehrzahl von Informationseinheiten umfassen, wobei der erste Kanal (100) eine zusätzliche Gruppe von Teilträgern bei einem zusätzlichen Frequenzband aufweist, wobei der zusätzlichen Gruppe von Teilträgern ein zusätzlicher Block von Informationen zugewiesen ist, wobei eine Übertragungseigenschaft für den ersten Kanal (100) bei dem ersten Frequenzband ($f_1$) besser als eine Übertragungseigenschaft für den ersten Kanal (100) bei dem zusätzlichen Frequenzband ist,

wobei der zweite Kanal (120) eine erste Gruppe von Teilträgern bei dem ersten Frequenzband ($f_1$) und eine zweite Gruppe von Teilträgern bei einem zweiten Frequenzband ($f_{22}$) aufweist, wobei eine Übertragungseigenschaft für den zweiten Kanal (120) bei dem ersten Frequenzband ($f_1$) schlechter als eine Übertragungseigenschaft für den zweiten Kanal (120) bei dem zweiten Frequenzband ($f_{22}$) ist, wobei die Weiterleitungsvorrichtung folgendes Merkmal aufweist:

einen Zuweiser, der konfiguriert ist, um den Block von Informationen aus der ersten Gruppe von Teilträgern des ersten Kanals (100) der zweiten Gruppe von Teilträgern des zweiten Kanals (120) zuzuweisen, wobei der Zuweiser ferner zum Zuweisen des zusätzlichen Blocks von Informationen, der der zusätzlichen Gruppe von Teilträgern des ersten Kanals (100) zugewiesen ist, der ersten Gruppe von Teilträgern des zweiten Kanals (120) konfiguriert ist.

**14.** Computerprogramm mit einem Programmcode zum Durchführen des Verfahrens zum Weiterleiten von Informationen gemäß Anspruch 1, wenn das Computerprogramm auf einem Computer abläuft.

**Revendications**

**1.** Procédé pour retransmettre des informations reçues via un premier canal (100) à un deuxième canal (120),

le premier canal (100) présentant un premier groupe de sous-porteuses à la première bande de fréquences ($f_1$) et présentant, y attribué, un bloc d'informations comportant une pluralité d'unités d'information, où le premier canal (100) présente un groupe additionnel de sous-porteuses à une bande de fréquences additionnelle, le groupe additionnel de sous-porteuses présentant, y attribué, un bloc additionnel d'informations, une propriété de transmission pour le premier canal (100) à la première bande de fréquences ($f_1$) étant meilleure qu'une propriété de transmission pour le premier canal (100) à la bande de fréquences additionnelle,

le deuxième canal (120) présentant un premier groupe de sous-porteuses à la première bande de fréquences ($f_1$) et un deuxième groupe de sous-porteuses à une deuxième bande de fréquences ($f_{22}$), une propriété de transmission pour le deuxième canal (120) à la première bande de fréquences ($f_1$) étant plus mauvaise qu'une propriété de transmission pour le deuxième canal (120) à la deuxième bande de fréquences ($f_{22}$), le procédé comprenant l'étape consistant à:

attribuer le bloc d'informations du premier groupe de sous-porteuses du premier canal (100) au deuxième groupe de sous-porteuses du deuxième canal (120); et

attribuer le bloc d'informations additionnel attribué au groupe de sous-porteuses additionnel du premier canal (100) au premier groupe de sous-porteuses du deuxième canal (120).

**2.** Procédé selon la revendication 1, comprenant par ailleurs l'étape consistant à:

transmettre une information sur une attribution du bloc d'informations du premier groupe de sous-porteuses du premier canal (100) au deuxième groupe de sous-porteuses du deuxième canal (120) via le deuxième canal (120).

**3.** Procédé selon l'une des revendications 1 à 2, dans lequel une étape consistant à:

recevoir les informations sans fil du premier canal (100) précède l'étape d'attribution; et dans lequel une étape consistant à
transmettre les informations sans fil via le deuxième canal (120) suit l'étape d'attribution.

4.  Procédé selon l'une des revendications 1 à 3, dans lequel une réception d'informations du premier canal (100) comprend l'exécution d'une opération de transformation de Fourier ou d'une opération de transformation de Fourier inverse.

5.  Procédé selon l'une des revendications 1 à 4, dans lequel la retransmission des informations via le deuxième canal comprend la génération d'un signal de transmission en exécutant une opération de transformation de Fourier ou une opération de transformation de Fourier inverse, dans lequel une attribution du bloc d'informations à la deuxième sous-porteuse du deuxième canal (120) et le bloc d'informations sont utilisés comme entrée pour l'opération de transformation de Fourier ou l'opération de transformation de Fourier inverse.

6.  Procédé selon l'une des revendications 1 à 5, comprenant par ailleurs l'étape consistant à:

    déterminer les valeurs d'une fonction de transfert ($H_1$) du premier canal (100) à partir du bloc d'informations reçu via le premier canal (100).

7.  Procédé selon l'une des revendications 1 à 6, dans lequel l'étape d'attribution comprend l'étape consistant à:

    comparer les valeurs de la fonction de transfert ($H_2$) du deuxième canal (120) à la première ($f_1$) et la deuxième ($f_2$) bande de fréquences, pour détecter la propriété de transmission la plus mauvaise du premier groupe de sous-porteuses du deuxième canal (120) comparée à la propriété de transmission du deuxième groupe de sous-porteuses du deuxième canal (120).

8.  Procédé selon l'une des revendications 1 à 7, dans lequel l'étape d'attribution comprend une formation de moyenne des valeurs de la fonction de transfert des sous-canaux du deuxième canal (120) présentant des fréquences porteuses dans la première bande de fréquences ($f_1$) et une formation de moyenne des valeurs de la fonction de transfert des sous-porteuses du deuxième canal (120) présentant des fréquences porteuses dans la deuxième bande de fréquences ($f_{22}$).

9.  Procédé selon l'une des revendications 1 à 8, dans lequel l'étape d'attribution comprend une mesure de temps pour déterminer un intervalle de temps et maintenir constante une attribution du bloc d'informations du premier groupe de sous-porteuses du premier canal (100) au deuxième groupe de sous-porteuses du deuxième canal (120) pendant une pluralité dedits intervalles de temps.

10. Procédé selon la revendication 9, dans lequel l'étape d'attribution comprend une formation de moyenne des valeurs de la fonction de transfert des sous-porteuses du premier canal (100) présentant des fréquences porteuses dans la première bande de fréquences ($f_1$) et une formation de moyenne des valeurs de la fonction de transfert des sous-porteuses du premier canal (100) présentant des fréquences porteuses dans la bande de fréquences additionnelle.

11. Procédé selon la revendication 9 ou 10, dans lequel le deuxième canal (120) comprend une autre groupe de sous-porteuses à une autre bande de fréquences, une propriété de transmission de l'autre groupe de sous-porteuses du deuxième canal (120) étant meilleure que la propriété de transmission du deuxième groupe de sous-porteuses du deuxième canal (120) et dans lequel l'étape d'attribution comprend attribuer le paquet d'informations du premier groupe de sous-porteuses du premier canal (100) au deuxième groupe de sous-porteuses du deuxième canal (120) et ne pas attribuer le paquet d'informations du premier groupe de sous-porteuses du premier canal (100) à l'autre groupe de sous-porteuses du deuxième canal (120).

12. Procédé selon l'une des revendications 1 à 11, dans lequel le deuxième canal (120) présente un troisième groupe de sous-porteuses à une troisième bande de fréquences et présentant, y attribué, un autre bloc d'informations comportant une pluralité d'unités d'information et le premier canal (100) présente un quatrième groupe de sous-porteuses à la troisième bande de fréquences et un cinquième groupe de sous-porteuses à une quatrième bande de fréquences, une propriété de transmission pour le premier canal à la troisième bande de fréquences étant plus mauvaise qu'une propriété de transmission du premier canal (100) à la quatrième bande de fréquences, ou dans lequel le deuxième canal (120) présente le premier groupe de sous-porteuses à la première bande de fréquences et présente, y attribué, l'autre bloc d'informations comportant une pluralité d'unités d'information et le premier canal (100) présente un quatrième groupe de sous-porteuses à la première bande de fréquences et un cinquième groupe de sous-porteuses à une quatrième bande de fréquences, une propriété de transmission pour le premier canal à la première bande de fréquences étant plus mauvaise qu'une propriété de transmission du premier canal (100) à la quatrième bande de fréquences, le procédé comprenant par ailleurs l'étape consistant à:

attribuer l'autre bloc d'informations du troisième groupe de sous-porteuses du deuxième canal (120) au cinquième groupe de sous-porteuses du premier canal (100) ou attribuer l'autre bloc d'informations du premier groupe de sous-porteuses du deuxième canal (120) au cinquième groupe de sous-porteuses du premier canal (100).

13. Dispositif répétiteur pour retransmettre les informations reçues via un premier canal (100) à un deuxième canal (120), le premier canal (100) présentant un premier groupe de sous-porteuses à la première bande de fréquences ($f_1$) et présentant, y attribué, un bloc d'informations comportant une pluralité d'unités d'information, où le premier canal (100) présente un groupe additionnel de sous-porteuses à une bande de fréquences additionnelle, le groupe additionnel de sous-porteuses présentant, y attribué, un bloc d'informations additionnel, une propriété de transmission pour le premier canal (100) à la première bande de fréquences ($f_1$) étant meilleure qu'une propriété de transmission pour le premier canal (100) à la bande de fréquences additionnelle,
le deuxième canal (120) présentant un premier groupe de sous-porteuses à la première bande de fréquences ($f_1$) et un deuxième groupe de sous-porteuses à une deuxième bande de fréquences ($f_{22}$), une propriété de transmission pour le deuxième canal (120) à la première fréquence ($f_1$) étant plus mauvaise qu'une propriété de transmission pour le deuxième canal (120) à la deuxième bande de fréquences ($f_{22}$), le dispositif répétiteur comprenant:

un moyen d'attribution configuré pour attribuer le bloc d'informations du premier groupe de sous-porteuses du premier canal (100) au deuxième groupe de sous-porteuses du deuxième canal (120), où le moyen d'attribution est, par ailleurs, configuré pour attribuer le bloc d'informations additionnel attribué au groupe additionnel de sous-porteuses du premier canal (100) au premier groupe de sous-porteuses du deuxième canal (120).

14. Programme d'ordinateur ayant un code de programme pour réaliser le procédé de retransmission d'informations selon la revendication 1 lorsque le programme d'ordinateur est exécuté sur un ordinateur.

FIG. 1A

FIG. 1B

FIG. 2A

**Downlink:**

Base Station → [table: 1, 2, ⋮, $N_c$] → Relay → [table: $v_{DL}(1)$, $v_{DL}(2)$, ⋮, $v_{DL}(N_c)$] → Mobile Station

1. timeslot — 2. timeslot

Relay estimates new $H_{BS \to RS,k}$, calculates new $v_{DL(k)}$ and retransmits the OFDM packet with subcarrier reordering

**Uplink:**

Base Station ← [table: $v_{UL}(1)$, $v_{UL}(2)$, ⋮, $v_{UL}(N_c)$] ← Relay ← [table: 1, 2, ⋮, $N_c$] ← Mobile Station

2. timeslot — 1. timeslot

Relay estimates new $H_{RS \to MS,k}$, calculates new $v_{UL}(k)$ and retransmits the OFDM packet with subcarrier reordering

## FIG. 2B

EP 1 750 403 B1

| A1-NLOS | | B1-LOS | | B1-NLOS | |
|---------|---------|---------|---------|---------|---------|
| Delay | Power/K | Delay | Power/K | Delay | Power/K |
| 0ns | 0dB | 0ns | 0dB/16dB | 0ns | -1.25dB/9dB |
| 5ns | -1.6dB | 10ns | -4.4dB/3dB | 10ns | 0dB/6dB |
| 10ns | -2.5dB | 30ns | -1.2dB/9dB | 40ns | -0.38dB |
| 15ns | -3.9dB | 45ns | -8.4dB | 60ns | -0.1dB |
| 20ns | -5.2dB | 65ns | -13dB | 85ns | -0.73dB |
| 25ns | -5.6dB | 85ns | -15.1dB | 110ns | -0.63dB |
| 30ns | -6dB | 105ns | -16.1dB | 135ns | -1.78dB |
| 35ns | -7.3dB | | | 165ns | -4.07dB |
| 40ns | -6.8dB | | | 190ns | -5.12dB |
| 45ns | -5.8dB | | | 220ns | -6.34dB |
| 50ns | -7.7dB | | | 245ns | -7.35dB |
| 60ns | -8.5dB | | | 270ns | -8.86dB |
| 70ns | -8.4dB | | | 300ns | -10.1dB |
| 80ns | -13dB | | | 325ns | -10.5dB |
| 90ns | -11.8dB | | | 350ns | -11.3dB |
| 100ns | -12.8dB | | | 375ns | -12.6dB |
| 110ns | -17.6dB | | | 405ns | -13.9dB |
| 120ns | -20dB | | | 430ns | -14.1dB |
| | | | | 460ns | -15.3dB |
| | | | | 485ns | -16.3dB |

# FIG. 3

FIG. 4

B1_LOS_B1_NLOS_Rmax6_SNRRS10

Legend:
- Conventional
- Sorted Chunks
- Sorted Subcarriers

Blind transmission

Adaptive Modulation

BER vs SNR$_{MS}$, dB

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WERNER MOHR ; RAINER LÜDER ; KARL-HEINZ MÖHRMANN.** Data Rate Estimates, Range Calculations and Spectrum Demand for New Elements of Systems Beyond IMT 2000. *5th International Symposium on Wireless Personal Multimedia Communications,* October 2002, vol. 1, 37-46
- **J. NICHOLAS LANEMAN ; DAVID N.C. TSE ; GREGORY W. WORNELL.** Cooperative Diversity in Wireless Networks: Efficient Protocols and Outage Behavior. *IEEE Transactions on Information Theory*
- **ANDREW SENDONARIS ; ELZA ERKIP ; BEHNAAM AAZHANG.** User Cooperation Diversity, Part I: System Description. *IEEE Transactions on Communications,* November 2003, vol. 15, 1927-1938
- **ANDREW SENDONARIS ; ELZA ERKIP ; BEHNAAM AAZHANG.** User Cooperation Diversity, Part II: Implementation Aspects and Performance Analysis. *IEEE Transactions on Communication,* November 2003, vol. 15, 1939-1948
- **MARC KUHN ; BORIS RANKOV.** Space-Time Processing for Cooperative Relay Networks. *Proc. IEEE Vehicular Technology Conference,* October 2004

- **M. DOHLER ; J. DOMINGUEZ ; H. AGHVAMI.** Link capacity analysis for virtual antenna arrays. *Proc. IEEE Vehicular Technology Conference,* September 2002, vol. 1, 440-443
- **ARMIN WITTNEBEN ; BORIS RANKOV.** Impact of Cooperative Relays on the Capacity of Rank-Deficient MIMO Channels. *Proceedings of the 12th IST Summit on Mobile and Wireless Communications,* June 2003, 421-425
- **GUOQING LI ; JUI LIU.** On the Capacity of the Broadband Relay Networks. *Proc. 38th Annual Asilomar Conference on Signals, Systems and Computers,* November 2004
- **LIYU, C. et al.** Improved HARQ scheme using channel quality feedback for OFDM systems. *2004 IEEE 59th Vehicular Technology Conference, VTC 2004-Spring (IEEE CAT. NO. 04CH37514,* 2004, vol. 4, 1869-1872
- **ROBERT P.H. FISCHER ; JOHANNES B. HUBER.** A new loading algorithm for discrete multitone transmission. *Proc. Global Telecommunications Conference,* November 1996, vol. 1, 724-728